(19) Europäisches Patentamt
European Patent Office
Office européen des brevets

(11) Veröffentlichungsnummer: **0 359 044 A2**

(12) **EUROPÄISCHE PATENTANMELDUNG**

(21) Anmeldenummer: **89116072.3**

(22) Anmeldetag: **31.08.89**

(51) Int. Cl.5: **C08L 69/00 , C08L 71/12 , //(C08L69/00,71:12,25:06,53:02, C08F283:01)**

(30) Priorität: **14.09.88 DE 3831241**

(43) Veröffentlichungstag der Anmeldung: **21.03.90 Patentblatt 90/12**

(84) Benannte Vertragsstaaten: **BE DE FR GB IT NL**

(71) Anmelder: **BASF Aktiengesellschaft**
**Carl-Bosch-Strasse 38**
**D-6700 Ludwigshafen(DE)**

(72) Erfinder: **Muehlbach, Klaus, Dr.**
**Dr.-Heinrich-Winter-Strasse 19**
**D-6148 Heppenheim(DE)**
Erfinder: **Bohnet, Siegbert, Dr.**
**Collinistrasse 5**
**D-6800 Mannheim 1(DE)**
Erfinder: **Ostermayer, Bertram, Dr.**
**Pfaffenpfad 14**
**D-6701 Roedersheim-Gronau(DE)**
Erfinder: **Brandt, Hermann, Dr.**
**231 Manor Haus Hill**
**Fort Mill, South Carolina 29715(US)**

(54) **Thermoplastische Formmassen.**

(57) Thermoplastische Formmassen, enthaltend

A) 9 bis 90 Gew.-% Polycarbonat,

B) 9 bis 90 Gew.-% einer Polymerkomponente, die aus 30 bis 100 Gew.-% Polyphenylenether $B_1$ und 0 bis 70 Gew.%, jeweils bezogen auf B, eines vinylaromatischen Polymeren $B_2$ besteht,

C) 1 bis 40 Gew.-% eines Segmentpolymeren, das mindestens ein Segment aus vinylaromatischen Monomeren und mindestens ein Polycarbonatsegment enthält,

D) 0 bis 40 Gew.-% eines schlagzäh modifizierenden Kautschuks und

E) 0 bis 30 Gew.-% übliche Zusatzstoffe.

EP 0 359 044 A2

## Thermoplastische Formmassen

Die Erfindung betrifft thermoplastische Formmassen, enthaltend

A) 9 bis 90 Gew.-% Polycarbonat,

B) 9 bis 90 Gew.-% einer Polymerkomponente, die aus 30 bis 100 Gew.-% Polyphenylenether $B_1$ und 0 bis 70 Gew.-%, jeweils bezogen auf B, eines vinylaromatischen Polymeren $B_2$ besteht,

C) 1 bis 40 Gew.-% eines Segmentpolymeren, das mindestens ein Segment aus vinylaromatischen Monomeren und mindestens ein Polycarbonatsegment enthält,

D) 0 bis 40 Gew.-% eines schlagzäh modifizierenden Kautschuks und

E) 0 bis 30 Gew.-% übliche Zusatzstoffe.

Außerdem betrifft die Erfindung die Verwendung der Formmassen zur Herstellung von Formkörpern sowie die daraus hergestellten Formkörper.

Die für die Mengen von A, B, C, D und E angegebenen Gew.-% beziehen sich auf die Summe von A bis E.

Formmassen aus Polyphenylenether, Polycarbonat und schlagzäh modifizierenden Kautschuken, wie zum Beispiel Blockcopolymeren aus Styrol und gegebenenfalls hydriertem Butadien, sind aus DE-A 28 19 493 bzw. DE-A 24 18 763 bekannt. Solche Mischungen besitzen jedoch nur in eng begrenzten Zusammensetzungsbereichen befriedigende mechanische Eigenschaften, wobei jedoch die multiaxiale Schlagzähigkeit stets verbesserungsbedürftig ist. Die aus solchen Mischungen hergestellten Formkörper weisen wegen der Delaminierung der Komponenten im allgemeinen schlechte Gebrauchseigenschaften auf.

Mischungen aus einem vinylaromatischen Polymerisat wie schlagzähmodifiziertem Polystyrol, einem Blockcopolymer aus aromatischem Polycarbonat und Polyphenylenether sind aus der US-A 4 446 278 bekannt. Die Thermostabilität dieser Formmassen reicht im Hinblick auf die hohen Verarbeitungstemperaturen nicht aus.

Aufgabe der vorliegenden Erfindung war es, Formmassen auf Basis von Polyphenylenether und Polycarbonat zu schaffen, die bei guten sonstigen mechanischen Eigenschaften eine hohe multiaxiale Schlagzähigkeit aufweisen.

Demgemäß wurden die eingangs definierten Formmassen gefunden.

Weiterhin wurden besondere Ausführungsformen gemäß der Unteransprüche gefunden.

Der Anteil der Komponente A an den erfindungsgemäßen Formmassen beträgt 9 bis 90, bevorzugt 17 bis 80, insbesondere 20 bis 75 Gew.-%. Bei der Komponente A handelt es sich um an sich bekanntes, vorzugsweise aromatisches Polycarbonat (s. z.B. Houben-Weyl, Methoden der organischen Chemie, Bd. E 20 (1987) S. 1443 bis 1457).

Geeignet sind aromatische Homopolycarbonate und Copolycarbonate auf Basis der Diphenole der Formel 1

HO-Z-OH (I)

worin Z einen zweiwertigen ein- oder mehrkernigen aromatischen Rest mit 6 bis 30 C-Atomen bedeutet, wobei Z derart gebaut ist, daß die beiden 0H-Gruppen direkt an je ein C-Atom eines aromatischen Systems gebunden sind.

Bevorzugte Diphenole sind Verbindungen der Formel

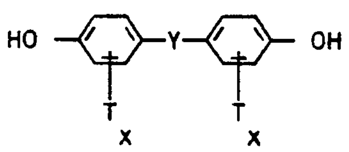 (II),

in der

Y eine Einfachbindung, einen Alkandiyl- oder Alkylidenrest mit 1 bis 7 C-Atomen, einen Cycloalkandiyl- oder Cycloalkylidenrest mit 5 bis 12 C-Atomen, -O-, -S-,

- S -, -$SO_2$-, oder - C -,
  ‖ ‖
  O O

T Methyl, Chlor oder bevorzugt Brom und x 0, 1 oder 2, bevorzugt 2 und insbesondere 0 bedeuten.

Gut geeignete Diphenole sind beispielsweise Hydrochinon, Resorcin, 4,4′-Dihydroxydiphenyl, 2,2-Bis-(4-hydroxyphenyl)-propan (= Bisphenol A), 2,4-Bis-(4-hydroxyphenyl)-2-methylbutan, 2,2-Bis-(3-chlor-4-hydroxyphenyl)-propan, 1,1-Bis-(4-hydroxyphenyl)-isobutan, 4,4′-Dihydroxydiphenylsulfid, 4,4′-Dihydroxydiphenylsulfon sowie deren di- und tetrahalogenierte Derivate.

Bevorzugte Diphenole sind 1,1-Bis-(4-hydroxyphenyl)-cyclohexan, insbesondere 2,2-Bis-(4-hydroxyphenyl)-propan.

Die Diphenole sind entweder literaturbekannt oder nach literaturbekannten Verfahren herstellbar.

Die Homo- oder Copolycarbonate können in bekannter Weise verzweigt sein, und zwar vorzugsweise durch den Einbau von 0,05 bis 2,0 Mol.-%, bezogen auf die Summe der eingesetzten Diphenole, an tri- oder mehr als trifunktionellen Verbindungen, beispielsweise solchen mit drei oder mehr als drei phenolischen 0H-Gruppen wie Pyrogallol, Phloroglucin oder Hydroxyhydrochinon.

Bevorzugte Polycarbonate sind neben dem Bisphenol-A-Homopolycarbonat die Copolycarbonate von Bisphenol A mit bis zu 15 Mol.-%, bezogen auf die Molsumme an Diphenolen, an 2,2-Bis-(3,5-dibrom-4-hydroxyphenyl)-propan.

Die Homo- oder Copolycarbonate haben mittlere Molekulargewichte ($M_w$, gemessen beispielsweise durch Ultrazentrifugation oder Streulichtmessung) von 10 000 bis 200 000, vorzugsweise von 20 000 bis 80 000.

Die Herstellung der Homo- und Copolycarbonate der Komponente A ist literaturbekannt und kann beispielsweise mit Phosgen nach dem Phasengrenzflächenverfahren oder in homogener Phase (dem sogenannten Pyridinverfahren) erfolgen, wobei das jeweils einzustellende Molekulargewicht in bekannter Weise durch eine entsprechende Menge an bekannten Kettenabbrechern erzielt wird.

Geeignete Kettenabbrecher sind beispielsweise Phenol, p-Chlorphenol, p-tert.-Butylphenol oder 2,4,6-Tribromphenol, aber auch langkettige Alkylphenole wie 4-(1,3-Tetramethyl-butyl)-phenol gemäß DE-A 2 842 005 oder Monoalkylphenole oder Dialkylphenole mit insgesamt 8 bis 20 C-Atomen in den Alkylsubstituenten wie beispielsweise p-Nonylphenol, 3,5-di-tert.-Butylphenol, p-tert.-Octylphenol, p-Dodecylphenol, 2-(3,5-dimethylheptyl)-phenol und 4-(3,5-Dimethylheptyl)-phenol.

Ebenfalls geeignet als Komponente A sind estergruppenhaltige aromatische Polycarbonate, mit denen gute Erfolge erzielt wurden. Polymere dieser Art sind beispielsweise aus (G.S. Kolesnikov et al, J. Polym. Sci. USSR, Vol. 9, 1705-1711 (1967); US 3 030 331, 3 169 121, 3 409 704, DE-A 27 14 544, 27 58 030 und 30 07 934 bekannt.

Es handelt sich dabei um Polyestercarbonate auf Basis der oben genannten Diphenole, Terephthal- und/oder Isophthalsäure, Phosgen, Kettenabbrechern und gegebenenfalls Verzweigungsmitteln, mit einem Estergruppengehalt von 99,95 bis 5, bevorzugt 95 bis 10 Mol bezogen auf die Summe von Ester- und Carbonat-Gruppen.

Das Molekulargewicht $M_w$ der estergruppenhaltigen Polycarbonate liegt im allgemeinen zwischen 8000 und 200 000, bevorzugt zwischen 10 000 und 60 000.

Als Diphenole, Verzweigungsmittel und Kettenabbrecher für die Polyestercarbonate eignen sich die schon genannten Verbindungen. Als Kettenabbrecher kommen zusätzlich Verbindungen der Formel III

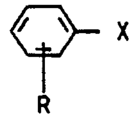

(III)

in Frage, worin

X für OCOCl oder COCl steht und

R einen verzweigten Alkylrest mit 8 bis 9 C-Atomen darstellt, mit der Maßgabe, daß R in o- oder bevorzugt in p-Position steht.

Die Kettenabbrecher werden im allgemeinen in Mengen von 0, 1 bis 10 Mol.-% vorzugsweise 0,3 bis 7 Mol.-% (im Falle von Phenolen, bezogen auf Diphenole, im Falle von Säurechloriden und Chlorkohlensäureestern, bezogen auf Säuredichloride) verwendet.

Die Herstellung der aromatischen Polyestercarbonate erfolgt vorzugsweise nach dem Phasengrenzflächenverfahren, das beispielsweise durch V.V. Korshak und S.V. Vinogradova in "Polyesters", Pergamon Press, 1965, S. 448, beschrieben ist. Die Polykondensation kann auch in einem Lösungsmittel in Gegenwart zumindest stöchiometrischer Mengen tertiärer Amine zum Binden des freigesetzten Halogenwasserstoffes durchgeführt werden. Dieses Verfahren ist z.B. in der DE-A 27 14 544 beschrieben.

Es können auch Gemische von verschiedenen Polycarbonaten eingesetzt werden.

Die Komponente B liegt in den erfindungsgemäßen Formmassen in Mengen von 9 bis 90, bevorzugt 17 bis 80, insbesondere 20 bis 75 Gew.-% vor.

Es handelt sich dabei um eine Polymerkomponente aus 30 bis 100, bevorzugt 40 bis 100 Gew.-% Polyphenylenether $B_1$ and 0 bis 70, bevorzugt 0 bis 60 Gew.-% eines vinylaromatischen Polymeren $B_2$.

Die in Frage kommenden Polyphenylenether $B_1$ sind an sich bekannt (vgl. Houben-Weyl, Methoden der organischen Chemie, Bd. E20 (1987) S. 1320-1388), sie werden nach üblichen Verfahren aus in ortho-Position durch Alkylgruppen, Alkoxigruppen, Chlor oder Brom disubstituierten Phenolen durch oxidative Kupplung in Gegenwart von Kupfer oder Mangan und Amin enthaltenden Katalysatoren hergestellt (vgl. US-Patent 3 661 848, 3 378 505, 3 306 874, 3 306 875 und 3 639 656). Die Alkyl- oder Alkoxigruppen, die bevorzugt 1 bis 4 C-Atome, aber kein α-ständiges tertiäres Wasserstoffatom enthalten, können ihrerseits durch Chlor oder Brom substituiert sein. Geeignete Polyphenylenether sind beispielsweise Poly-(2,6-diethyl-1,4-phenylen)-ether, Poly-(2-methyl-6-ethyl1,4-phenylen)-ether, Poly-(2-methyl-6-propyl-1,4-phenylen)-ether, Poly-(2,6-dipropyl-1,4-phenylen)-ether, Poly-(2-ethyl-6propyl-1,4-phenylen)-ether, Poly-(2,6-dichlor-1,4-phenylen)-ether und Poly-(2,6-dibrom-1,4-phenylen)-ether oder Copolymere, wie solche, die 2,3,6-Trimethylphenol enthalten, außerdem Polymermischungen. Bevorzugt ist Poly-(2,6-dimethyl-1,4-phenylen)-ether oder Copolymere aus 2,6-Dimethylphenol und 2,3,6-Trimethylphenol. Die in einem solchen Verfahren hergestellten Polyphenylenether weisen im allgemeinen eine relative Viskosität von 0,3 bis 0,7 dl/g, gemessen in 1 gew.-%iger Lösung in Chloroform bie 25 °C auf.

Die Komponente $B_2$ ist ein vinylaromatisches Polymer.

Das Molekulargewicht (Gewichtsmittel) dieser Polymere liegt im allgemeinen im Bereich von 1500 bis 2.000.000, vorzugsweise im Bereich von 70.000 bis 1.000.000.

In Frage kommen vinylaromatische Polymere aus Styrol, Chlorstyrol, α-Methylstyrol, p-Methylstyrol; in untergeordneten Anteilen (vorzugsweise nicht mehr als 20, insbesondere nicht mehr als 8 Gew.-%), können auch Comonomere wie (Meth)acrylnitril oder (Meth)acrylsäureester am Aufbau beteiligt sein. Ein besonders bevorzugtes vinylaromatisches Polymeres ist Polystyrol. Es versteht sich, daß auch Mischungen dieser Polymere eingesetzt werden können.

Verfahren zur Herstellung solcher vinylaromatischer Polymerer sind an sich bekannt und in der Literatur beschrieben, so daß sich hier nähere Angaben erübrigen. Nur beispielsweise seien hier als geeignete Polymerisationsverfahren die Masse-, Suspensions-, Emulsions- oder Lösungspolymerisation erwähnt.

Bei der Komponente $B_2$ handelt es sich vorzugsweise um schlagfest modifiziertes Polystyrol mit Kautschukgehalten von 3 bis 25 Gew.-%, das durch Polymerisation von Styrol in Gegenwart eines Kautschuks erhalten wird.

Die meist angewandten Verfahren zur Herstellung schlagzäh modifizierter Styrolpolymerisate sind die Polymerisation in Masse oder Lösung, wie es beispielsweise in der US-A 2 694 692 beschrieben ist und Verfahren zur Masse-Suspensionspolymerisation, wie sie beispielsweise in der US-A 2 862 692 beschrieben sind. Selbstverständlich sind auch andere Verfahren anwendbar.

Als Kautschuke werden die üblicherweise für die Schlagzähmodifizierung von Styrolpolymerisaten gebräuchlichen natürlichen oder synthetischen Kautschuke eingesetzt. Geeignete Kautschuke im Sinne der Erfindung sind außer Naturkautschuk z.B. Polybutadien, Polyisopren und Mischpolymerisate des Butadiens und/oder Isoprens mit Styrol und anderen Comonomeren, die eine Glastemperatur unter -20 °C besitzen. Besonders eignen sich Butadien-Polymerisate mit einem 1,4-cis-Gehalt, der zwischen 25 und 98 % liegt.

Die schlagfesten Polystyrole sind an sich bekannt und größtenteils im Handel erhältlich, wobei die mittleren Teilchengrößen ($d_{50}$-Wert der integralen Masseverteilung) bevorzugt im Bereich von 0,8 bis 7 µm bei einer Viskositätszahl der Hartmatrix von 50 bis 100 ml/g (0,5%ig in Toluol bei 23 °C) liegen.

Das Segmentpolymere C liegt in den erfindungsgemäßen Formmassen in Mengen von 1 bis 40, bevorzugt 3 bis 20, insbesondere 4 bis 20 vor.

Unter Segmentpolymeren im Sinne dieser Erfindung werden Block- oder Pfropfcopolymere mit linear oder verzweigt angeordneten Segmenten X und Y verstanden, die gegebenenfalls über mindestens ein Bindeglied miteinander verbunden sind. X steht dabei für einen Polymerblock aus Vinylaromaten und Y für einen Polycarbonatblock. Die Segmentpolymere können beispielsweise Blockcopolymere der Struktur

X - Y,

Y - X - Y,

Y - X - Y - X - Y

X - Y - X,

$(X - Y)_n$ oder

$X (-Y)_n$ bzw. $Y (-X)_n$

mit n = 1 bis etwa 50 sein,

wobei die letzteren mit n = 3 bis etwa 50 einen sternförmigen Aufbau besitzen. Es kann sich auch um Pfropfcopolymere, in denen ein oder mehrere Segmente X bzw. Y als Seitenäste auf eine Polymerhauptkette Y bzw. X aufgepfropft sind, handeln.

Block- oder Pfropfcopolymere aus vinylaromatischen und Polycarbonatsegmenten sind an sich bekannt aus beispielsweise Houben-Weyl "Methoden der organischen Chemie, Bd. E20 (1987), 1454, A. Polowinska

et al Makromol. Chem. Rapid Commun. 5 (1984) 399, US-A 3 462 515 oder JP-A 73/25076.

Das Molekulargewicht der Segmentpolymeren ist unkritisch. Üblicherweise liegt das Gewichtsmittel zwischen 10 000 und 2 000 000, bevorzugt zwischen 20 000 und 250 000.

Das Gewichtsverhältnis der vinylaromatischen und der Polycarbonat-Segmente im Segmentpolymer liegt üblicherweise zwischen 0,2 und 8, bevorzugt zwischen 0,25 und 4.

Das vinylaromatische Segment wird im allgemeinen aus Styrol, das mit $C_1$-bis $C_8$-Alkyl, vorzugsweise Methyl, Ethyl, Chlor oder Brom substituiert sein kann, oder aus einem Gemisch dieser Monomeren gebildet. Beispielhaft seien genannt α-Methylstyrol, p-Methylstyrol, p-Chlorstyrol, m- und p-Chlormethylstyrol und insbesondere Styrol selbst.

Im Polycarbonatsegment können die obengenannten Homopolycarbonate, Copolycarbonate und estergruppenhaltigen Polycarbonate eingesetzt werden, so daß sich hier weitere Angaben erübrigen. Die Synthese der Segmentpolymeren C kann nach allgemeinen Herstellprinzipien für Block- oder Pfropfcopolymere erfolgen. Genannt seien beispielsweise

- Verknüpfung der Segmente X bzw. Y oder gegebenenfalls deren endgruppenmodifizierte Derivate mit multifunktionellen Kopplungsmitteln oder
- Polymerisation von X (bzw. Y) in Gegenwart von polymeren Segmenten Y (bzw. X), die Kopplungsmittel enthalten können, die mit X (bzw. Y) copolymerisierbar sind.

Zur Herstellung der Segmentpolymeren C werden die allgemein bekannten Methoden der anionischen Polymerisation der vinylaromatischen Verbindungen mit Metallorganylen und Reaktion der entstandenen mono-, di- oder multivalenten polymeren Anionen mit Polycarbonat bevorzugt. Diese Herstellung entspricht der von polymeren Anionen und deren Reaktion mit Protonen liefernden Substanzen, wie sie z.B. aus DE-A 15 20 543, DE-A 19 05 422, A. Polowinska, Makromol. Chem. Rapid Commun. 5 (1984) 399 oder M. Szwarc "Carbanions, Living Polymers and Electron Transfer Processes", John Wiley, N.Y. 1968, bekannt ist. Sie wird üblicherweise ohne oder mit Lösungsmittel wie Heptan, Toluol, Tetrahydrofuran oder Dioxan mit Hilfe von Metallorganylen wie Butyllithium, Naphthalinnatrium oder Naphthalinlithium unter Ausschluß von $CO_2$, Sauerstoff und Wasser bei Temperaturen von -80 bis +100° C durchgeführt.

Die Herstellung von C kann mit Vorteil durch Aufpfropfen von vinylaromatischen Verbindungen auf Polycarbonate erfolgen. Dazu werden die vinylaromatischen Polymere üblicherweise radikalisch in Gegenwart des Polycarbonates nach bekannten Methoden polymerisiert (Houben-Weyl, Methoden der organischen Chemie, 4. Auflage, Bd. 19 (1980) S. 277 bis 295).

Das hierbei verwendete Polycarbonat enthält vorteilhafterweise ein Kopplungsmittel. Es handelt sich dabei um Substanzen, die in die Polycarbonatkette z.B. als Endgruppen eingebaut werden können und eine mit vinylaromatischen Verbindungen copolymerisierbare Doppelbindung enthalten. Die Reste dieser Kopplungsmittel stellen im Segmentpolymeren die Bindeglieder zwischen den vinylaromatischen Segmenten und den Polycarbonatsegmenten dar. Das Kopplungsmittel wird im allgemeinen während der Herstellung des Polycarbonates, bevorzugt gemeinsam mit dem Kettenabbrecher oder gegebenenfalls auch an seiner Stelle dem Reaktionsansatz zugegeben. Üblicherweise wird das Kopplungsmittel in den Mengen, wie sie oben für den Kettenabbrecher genannt wurden, eingesetzt. Gute Erfolge werden erzielt, wenn das Gewichtsverhältnis von Kopplungsmittel zu Kettenabbrecher zwischen 0,5 und 2, bevorzugt 0,8 und 1,2 liegt.

Bevorzugt werden als Kopplungsmittel Säurehalogenide wie Acryloylchlorid, und insbesondere Methacryloylchlorid eingesetzt. Daneben sind auch hydroxylgruppenhaltige Verbindungen wie Hydroxyethyl-(meth)acrylat, Hydroxypropyl(meth)acrylat, Hydroxybutyl(meth)acrylat, Hydroxypentyl(meth)acrylat, Hydroxyhexyl(meth)acrylat, Hydroxydecyl(meth)acrylat, Diethylenglykolmono(meth)acrylat, Triethylenglykolmono(meth)acrylat, Tetraethylenglykolmono(meth)acrylat, Dipropylenglykolmono(meth)-acrylat, Tripropylenglykolmono(meth)acrylat, Hydroxycyclohexyl(meth)acrylat, Dihydroxypropyl(meth)acrylat oder die entsprechenden Acrylamide, ferner Alkenalkohole, Vinylbenzylalkohol, Vinylbenzolalkohole wie 1-Vinylbenzoethanol-2, außerdem 2-Hydroxyethyl-m-vinylbenzylether geeignet oder auch Glycidyl(meth)-acrylat oder Vinylglycidylether.

Als Komponente D werden 0 bis 40, bevorzugt 0 bis 30, insbesondere 1 bis 25 Gew.-% schlagzäh modifizierende Kautschuke eingesetzt. Es versteht sich von selbst, daß die Kautschuke D von der Komponente $B_2$ verschieden sind.

Schlagzähigkeitsverbessernde Elastomere (Kautschuke) für Polyphenylenether und Polycarbonate sind dem Fachmann an sich bekannt.

Nur beispielweise seien Kautschuke auf Ethylen-, Propylen-, Butadien- oder Acrylatbasis oder Mischungen dieser Monomeren genannt.

Derartige Polymere werden z.B. in Houben-Weyl, Methoden der organischen Chemie, Bd. 14/1 (Georg-Thieme-Verlag, Stuttgart, 1961), Seiten 392 bis 406 und in der Monographie von C.B. Bucknall, "Toughened Plastics" (Applied Science Publishers, London, 1977) beschrieben.

Im folgenden werden einige geeignete Arten solcher Elastomerer vorgestellt.

Als erste Gruppe sind die sogenannten Ethylen-Propylen (EPM) bzw. Ethylen-Propylen-Dien-(EPDM)-Kautschuke zu nennen, die vorzugsweise ein Verhältnis von Ethylenresten zu Propylenresten im Bereich von 40:60 bis 65:35 aufweisen.

Die Mooney-Viskositäten (MLI + 4/100 °C) solcher unvernetzter EPM bzw. EPDM-Kautschuke (Gelgehalte im allgemeinen unter 1 Gew.%) liegen bevorzugt im Bereich von 25 bis 100, insbesondere von 35 bis 90 (gemessen am großen Rotor nach 4 Minuten Laufzeit bei 100 °C nach DIN 53 523).

EPM-Kautschuke haben im allgemeinen praktisch keine Doppelbindungen mehr, während EPDM-Kautschuke 1 bis 20 Doppelbindungen/100 C-Atome aufweisen können.

Als Dien-Monomere für EPDM-Kautschuke seien beispielsweise konjugierte Diene wie Isopren und Butadien, nicht konjugierte Diene mit 5 bis 25 C-Atomen wie Penta-1,4-dien, Hexa-1,4-dien, Hexa-1,5-dien, 2,5-Dimethyl-hexa-1,5-dien und Octa-1,4-dien, cyclische Diene wie Cyclopentadien, Cyclohexadiene, Cyclooctadiene und Dicyclopentadien sowie Alkenylnorbornene wie 5-Ethyliden-2-norbornen, 5-Butyliden-2-norbornen, 2-Methylallyl-5-norbornen, 2-Isopropenyl-5-norbornen und Tricyclodiene wie 3-Methyl-tricyclo-(5.2.1.0.2.6)-3,8-decadien oder deren Mischungen genannt. Bevorzugt werden Hexa-1,5-dien, 5-Ethyliden-2-Norbornen und Dicyclopentadien. Der Diengehalt der EPDM-Kautschuke beträgt vorzugsweise 0,5 bis 10, insbesondere 1 bis 8 Gew.%, bezogen auf das Gesamtgewicht des Kautschuks.

EPM- bzw. EPDM-Kautschuke können auch mit reaktiven Carbonsäuren oder deren Derivaten gepfropft sein. Hier seien nur stellvertretend Acrylsäure, Methacrylsäure und deren Derivate sowie Maleinsäureanhydrid genannt.

Eine weitere Gruppe geeigneter Kautschuke sind Copolymere des Ethylens mit Acrylsäure- und/oder Methacrylsäureestern, insbesondere solche, die zusätzlich noch Epoxid-Gruppen enthalten. Diese Epoxidgruppen werden vorzugsweise durch Zugabe von Epoxidgruppen enthaltenden Monomeren der allgemeinen Formeln IV oder V zum Monomerengemisch in den Kautschuk eingebaut

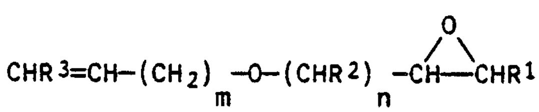 (IV)

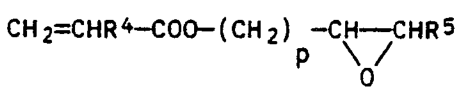 (V)

wobei $R^1$, $R^2$, $R^3$, $R^4$ und $R^5$ Wasserstoff oder Alkylgruppen mit 1 bis 6 C-Atomen darstellen, m eine ganze Zahl von 0 bis 20, n eine ganze Zahl von 0 bis 10 und p eine ganze Zahl von 1 bis 5 ist.

Bevorzugt sind $R^1$, $R^2$ und $R^3$ Wasserstoff, m hat den Wert 0 oder 1 und n ist 1. Die entsprechenden Verbindungen IV sind Alkenylglycidylether oder Vinylglycidylether.

Bevorzugte Beispiele für Verbindungen der Formel V sind Epoxidgruppenenthaltende Ester der Acrylsäure und/oder Methacrylsäure, wovon wiederum Glycidylacrylat und Glycidylmethacrylat besonders bevorzugt werden.

Der Ethylengehalt der Copolymeren liegt im allgemeinen im Bereich von 50 bis 98 Gew.%, der Anteil an Epoxidgruppen enthaltenden Monomeren und der Anteil des Acrylsäure- und/oder Methacrylsäureesters jeweils im Bereich von 1 bis 49 Gew.%.

Genannt seien Copolymerisate aus
50 bis 98, insbesondere 60 bis 95 Gew.% Ethylen,
1 bis 40, insbesondere 2 bis 20 Gew.% Glycidylacrylat und/oder Glycidylmethacrylat,
1 bis 45, insbesondere 10 bis 35 Gew.% n-Butylacrylat und/oder 2-Ethylhexylacrylat.

Weitere bevorzugte Ester der Acryl- und/oder Methacrylsäure sind die Methyl-, Ethyl-, Propyl- und i- bzw. t-Butylester. Auch Acrylsäure bzw. Methacrylsäure selbst können vorteilhaft eingesetzt werden.

Daneben können auch Vinylester und Vinylether als Comonomere eingesetzt werden.

Die Herstellung der vorstehend beschriebenen Ethylencopolymeren kann nach an sich bekannten Verfahren erfolgen, vorzugsweise durch statistische Copolymerisation unter hohem Druck und erhöhter Temperatur. Entsprechende Verfahren sind in der Literatur beschrieben.

Der Schmelzindex der Ethylencopolymeren liegt im allgemeinen im Bereich von 1 bis 80 g/10 min (gemessen nach DIN 53 735 bei 190 °C und 2,16 kg Belastung).

Geeignete Elastomere (Kautschuke) D sind weiterhin Emulsionspfropfcopolymerisate mit einer mittleren Teilchengröße von unter 0,5 µm aus
25 bis 98 Gew.% eines Acrylatkautschuks oder Dienkautschuks mit einer Glasübergangstemperatur von unter -20 °C als Pfropfgrundlage und

2 bis 75 Gew.% eines copolymerisierbaren ethylenisch ungesättigten Monomeren, dessen Homo- bzw. Copolymerisate eine Glasübergangstemperatur von mehr als 25 °C aufweisen, als Pfropfauflage.

Die Pfropfgrundlage sind üblicherweise Butadien-, Isopren-, Acrylat bzw. Methacrylatkautschuke, wobei bis zu 40 Gew.% weiterer Comonomerer enthalten sein können. Die $C_1$-$C_8$-Ester der Acrylsäure bzw. Methacrylsäure sowie deren halogenierte Derivate wie auch aromatische Acrylsäureester und deren Mischungen werden bevorzugt. Als Comonomere in der Pfropfgrundlage seien Acrylnitril, Methacrylnitril, Styrol, α-Methylstyrol, Acrylamide, Methacrylamide sowie Vinyl-$C_1$-$C_6$-Alkylether angeführt.

Die Pfropfgrundlage kann unvernetzt, teilweise oder vollständig vernetzt sein. Die Vernetzung wird durch Copolymerisation von vorzugsweise 0,02 bis 5 Gew.%, insbesondere 0,05 bis 2 Gew.% eines vernetzenden Monomeren mit mehr als einer Doppelbindung erzielt. Geeignete vernetzende Monomere werden z.B. in der DE-A 27 26 256 und der EP-A 50 265 beschrieben.

Bevorzugte vernetzende Monomere sind Triallylcyanurat, Triallylisocyanurat, Tricyclodecenarylat, Triacryloylhexahydro-s-triazin und Trialkylbenzole.

Falls die vernetzenden Monomeren mehr als 2 polymerisierbare Doppelbindungen aufweisen, ist es vorteilhaft, ihre Menge auf nicht mehr als 1 Gew.%, bezogen auf die Pfropfgrundlage, zu beschränken.

Bevorzugte Pfropfgrundlagen sind Emulsionspolymerisate mit einem Gelgehalt von mehr als 60 Gew.% (bestimmt in Dimethylformamid bei 25 °C nach M. Hoffmann, H. Krömer, R. Kuhn, Polymeranalytik, Georg-Thieme-Verlag, Stuttgart, 1977).

Ebenfalls geeignet als Pfropfgrundlage sind Acrylat-Kautschuke mit einem Dienkern, wie sie z.B. in der EP-A-50 262 beschrieben werden.

Als Pfropfmonomere eignen sich besonders Styrol, α-Methylstyrol, Acrylnitril, Methacrylnitril und Methylmethacrylat oder deren Mischungen, insbesondere solche aus Styrol und Acrylnitril im Gewichtsverhältnis 90/10 bis 50/50.

Die Pfropfausbeute, d.h. der Quotient aus der Menge des aufgepfropften Monomeren und der Menge des eingesetzten Pfropfmonomeren liegt im allgemeinen im Bereich von 20 bis 80 %.

Kautschuke auf der Basis von Acrylaten, die erfindungsgemäß verwendet werden können, werden z.B. in der DE-A 24 44 584 und der DE-A 27 26 256 beschrieben.

Neben den gegebenenfalls vorhandenen, gepfropften Kautschuken, wie Polybutadien-, Acrylat-, Styrol-Butadien-, Polybuten-Kautschuk, Ethylen-Buten-Kautschuk, hydrierten Styrol-Butadien-, Acrylnitril-Butadien- und Polyisopren-Kautschuken können diese auch ungepfropft zugesetzt werden. Als Kautschuke seien weiter erwähnt styrolgepfropfte Ethylen-Propylen-Kautschuke, thermoplastische Polyester-Elastomere und Ionomere, Styrol-Butadien-Blockcopolymere einschließlich AB-, ABA-, und ABAB-Block-Copolymere, gegebenenfalls mit verschmierten Übergängen und Stern-Block-Copolymere und ähnliche, analoge Isopren-Blockcopolymerisate und (teil)hydrierte Blockcopolymere.

Die Kautschuke D weisen vorzugsweise eine Glasübergangstemperatur von unter -30 °C, insbesondere von unter -40 °C auf.

Es versteht sich, daß auch Mischungen der vorstehend aufgeführten Kautschuktypen eingesetzt werden können.

Die erfindungsgemäße Formmasse kann als Komponente E 0 bis 30 Gew.-% Zusatzstoffe enthalten, die für Polycarbonate, Polyphenylenether und vinylaromatische Polymere oder deren Mischungen typisch und gebräuchlich sind. Als solche Zusatzstoffe seien beispielsweise genannt:
Füllstoffe - insbesondere Glas- und Kohlenstoffasern -, Gipsfasern, synthetische Calciumsilikate, Kaolin calciniertes Kaolin, Wollastonit, Talkum, Kreide sowie Materialien zur Erhöhung der Abschirmung von eletromagnetischen Wellen (z.B. Metallflocken, -pulver, -fasern, metallbeschichtete Füllstoffe), Farbstoffe, Pigmente, Antistatika, Antioxidanien, Stabilisatoren, Flammschutzmittel und Schmiermittel, die für die Weiterverarbeitung der Formmasse, z.B. bei der Herstellung von Formkörpern bzw. Formteilen erforderlich sind.

Als Flammschutzmittel eignen sich halogenhaltige Substanzen (in Kombination mit Synergisten wie Antimon-, Zink- oder Borverbindungen), phosphorhaltige Verbindungen, Triazinderivate sowie Fluorpolymere. Die Mittel können allein oder in Kombination verwendet werden.

Bei den Flammschutzmitteln kann es sich im weitesten Sinne handeln um Halogen, vorzugsweise Brom enthaltende nieder- und hochmolekulare (aromatische) Verbindungen, ausgewählt aus den Klassen der Aryle, Arylether, Arylalkylether, Arylamine, Arylimide, Arylanhydride, Phenole, Arylalkylimide und Arylsiloxane oder um Phosphor enthaltende organische Verbindungen wie Triphenylphosphinoxid und Triphenylphosphat.

Die erfindungsgemäßen thermoplastischen Formmassen erhält man zweckmäßig durch Mischen der Einzelkomponenten bei Temperaturen von 250 bis 360° C, insbesondere von 260 bis 320° C bei mittleren Verweilzeiten von 0,2 bis 30 Minuten in üblichen Mischvorrichtungen, wie Knetern, Banbury-Mischern und Einschneckenextrudern, vorzugsweise jedoch in einem Zweischneckenextruder. Um eine möglichst homogene Formmasse zu erhalten, ist eine intensive Durchmischung notwendig. Die Abmischreihenfolge der Komponenten kann variiert werden, so können zwei oder gegebenenfalls drei Komponenten vorgemischt werden, es können aber auch alle Komponenten gemeinsam gemischt werden.

Die erfindungsgemäßen Formmassen sind leicht verarbeitbar. Sie lassen sich zu Formkörpern mit guter Thermostabilität in Verbindung mit guten mechanischen Eigenschaften, insbesondere mit hoher Durchstoßarbeit, besonders bei tiefen Temperaturen, durch thermoplastische Verfahren wie Spritzguß oder Extrusion, herstellen. Weder im Formkörper noch in der Schmelze tritt eine makroskopische Entmischung der Polymerkomponenten ein.

Für die Herstellung erfindungsgemäßer Formmassen und Massen für Vergleichsversuche wurden die nachfolgend beschriebenen Produkte verwendet.

Komponente A

$A_1$ Als Komponente A wurde ein handelsübliches Polycarbonat auf Basis von Bisphenol A mit einer relativen Lösungsviskosität von 1,30 ml/g (0, 5%ig in Dichlormethan) eingesetzt.

$A_2$ In einen Stahlkessel mit intensiv wirkendem Rührer wurden unter Stickstoffatmosphäre 2,736 kg Bisphenol A (BPA), 1,5 l 45 Gew.-%ige wäßrige Natronlauge, 8,4 g Natriumborhydrid, 120 g Triethylbenzylammoniumchlorid, 36 l Wasser und 22 l Dichlormethan gefüllt und das Gemisch bis zur vollständigen Lösung des BPA gerührt.

In das intensiv gerührte Zweiphasengemisch wurde dann unter Wasserkühlung innerhalb 15 Minuten eine Lösung aus je 852,72 g Iso- und Terephthalsäurechlorid und 39, 5g (3, 5 Mol.-%) Phenol, gelöst in 3 l Dichlormethan, gegeben und 1 Stunde nachgerührt. Die Temperatur des Reaktionsgemisches überstieg dabei nicht 22° C. Durch Zugabe von Natriumhydroxid wurde der pH-Wert des Gemisches bei 12 bis 13 gehalten.

Unter fortgesetztem Rühren erfolgte die Einleitung von 600 g Phosgen, wobei die Temperatur wieder bei ca. 20° C und der pH-Wert bei 12 bis 13 gehalten wurden. Nach der Einleitung des Phosgens wurden 400 ml einer 1 gew.-%igen wäßrigen Lösung von Triethylamin zugesetzt und noch 1 Stunde nachgerührt.

Nach Abtrennung der wäßrig-alkalischen Phase wurde die organische Phase zunächst mit verdünnter Phosphorsäure, dann mit Wasser salzfrei gewaschen und ca. 50 % des Dichlormethans unter Normaldruck abdestilliert. Die verbliebene Lösung wurde mit 15 l Chlorbenzol verdünnt und die Abdestillation des Dichlormethans fortgesetzt, bis die Sumpftemperatur ca. 80° C betrug, das Polyestercarbonat sodann im Vakuumextruder vom Chlorbenzol befreit, als Strang abgezogen und granuliert. Das Granulat besaß eine relative Lösungsviskosität $\eta$rel von 1,195 ml/g, gemessen bei 30° C in Chloroform.

Komponente B

$B_1$1 Poly-(2,6-dimethyl-1,4-phenylen)-ether mit einer relativen Viskosität von 0,63 (gemessen in 1 gew.-%iger Lösung in $CHCl_3$ bei 25° C).

$B_1$2 Copolymer aus 94,6 Gew.% 2,6-Dimethylphenol und 5,4 Gew.% 2,3,6-Trimethylphenol mit einer relativen Viskosität von 0,71 ml/g

$B_2$1 Schlagfestes Polystyrol mit einem Polybutadienanteil von 9 Gew.-%, hergestellt gemäß DE-A 30 35 648.

$B_2$2 Polystyrol mit einem Molekulargewicht von 150 000 g/mol (viskosimetrische Messung in Toluol bei 25° C), hergestellt gemäß S.R. Sundler, W. Karo, Polymer Syn. org. Chem. Vol. 29/I,Academic Press, N.Y., 1974, S. 3.

Komponente C

C1 a) Herstellung eines $\omega$-Methacryloyl-polyester-co-polycarbonates

Es wurde wie im Beispiel A2 verfahren mit dem Unterschied, daß anstelle des Phenols eine Mischung aus 2 Mol.-% Methacryloylchlorid und 2 Mol.-% p-Nonylphenol als Kettenabbrecher eingesetzt wurde. Nach Austausch des Dichlormethans durch 15 l Chlorbenzol wurde mit Styrol, wie unten beschrieben, copolymerisiert.

b) Copolymerisation des Produktes von a) mit Styrol

7 l der Lösung des Produktes von a) in Chlorbenzol wurden mit weiteren 8 l Chlorbenzol und 3 kg Styrol gemischt und sorgfältig entgast. Dann wurde auf 90 °C erwärmt und 15 g Dibenzoylperoxid zugesetzt. Zur Kompensation des Initiatorzerfalls wurden nach jeweils 1 Stunde 5 g Dibenzoylperoxid zudosiert. Nach 8stündiger Reaktionszeit betrug der Umsatz 78 %. Das Produkt wurde durch Ausfällen isoliert. Das mittels Gelpermeationschromatographie (GPC) bestimmte Molekulargewicht (nach Eichung mit Polystyrol-Standards) beträgt 188 000 ($M_w$).

C2 Es wurde ein Polycarbonat-graft-polystyrol nach der Vorschrift von A. Polowinska et al (Makromol. Chem. Rap. Comm. 5, 399 (1984)) durch Umsetzung von anionisch polymerisierten, noch polymerisationsaktivem Polystyrol mit Polycarbonat hergestellt.

Zunächst wurde Styrol mit Butyllithium in THF polymerisiert. Am Ende der Polymerisation betrug das Molekulargewicht 100.000 ($M_w$ bestimmt mittels GPC).

Das Polycarbonat $A_1$ wurde sorgfältig getrocknet und in der 12fachen Menge THF gelöst. Diese Lösung wurde über eine Fritte zu der Lösung des lebenden Polystyrol gegeben. Es wurden gleiche Mengen Polystyrol und Polycarbonat eingesetzt. Nach 15 Minuten wurde Methyljodid (4facher Überschuß bezogen auf die Menge an Butyllithium) zugesetzt, 3 Stunden nachgerührt und in Methanol gefällt. Das Endprodukt besaß ein Molekulargewicht von 198.000 ($M_w$ bestimmt durch GPC).

Komponente D

D1 Dreiblockcopolymeres mit terminalen Polystyrolblöcken und einem hydrierten Polybutadien-Mittelblock:
Kraton® G 1650 der Fa. Shell.

D2 Dreiblockcopolymeres mit terminalen Polystyrolblöcken und Butadien-Mittelblock:
Luriflex® TR 1101 der Fa. Shell.

D3 Ethylen-buten-1-copolymerisat mit einem Buten-1-Anteil von 8 Gew.-%, einer Dichte von 0,919 $g/cm^3$

D4 16 Teile Butylacrylat und 0,4 Teile Tricyclodecenylacrylat werden in 150 Teilen Wasser unter Zusatz von einem Teil des Natriumsalzes einer $C_{12}$-$C_{18}$-Paraffinsulfonsäure, 0,3 Teilen Kaliumpersulfat, 0,3 Teilen Natriumhydrogencarbonat und 0,15 Teilen Natriumpyrophosphat unter Rühren auf 60 °C erwärmt. 10 Minuten nach dem Anspringen der Polymerisationsreaktion wurden innerhalb von 3 Stunden eine Mischung aus 82 Teilen Butylacrylat und 1,6 Teilen Tricyclodecenylacrylat zugegeben. Nach Beendigung der Monomerzugabe ließ man noch eine Stunde nachreagieren. Der erhaltene Latex des vernetzten Butylacrylat-Polymerisats hatte einen Feststoffgehalt von 40 Gew.%.

150 Teile des erhaltenen Polybutylacrylat-Latex wurden mit 40 Teilen Methylmethacrylat und 60 Teilen Wasser gemischt und unter Rühren nach Zusatz von weiteren 0,03 Teilen Kaliumpersulfat und 0,05 Teilen Lauroylperoxid 4 Stunden auf 65 °C erhitzt. Nach Beendigung der Pfropfmischpolymerisation wurde das Polymerisationsprodukt mittels Calciumchloridlösung bei 95 °C aus der Dispersion gefällt, mit Wasser gewaschen und im warmen Luftstrom getrocknet. Die Pfropfausbeute des Pfropfmischpolymerisats betrug 35 %.

Die in der Tabelle 1 angegebenen Gewichtsteile der Komponenten A bis D wurden in trockener Form auf einem Fluidmischer gemischt und bei 260 °C auf einen Doppelschneckenextruder, z.B. ZSK-Typ von Werner & Pfleiderer, extrudiert. Aus dem getrockneten Granulat der Proben wurden die Formkörper für die Eigenschaftsprüfungen durch Spritzgießen hergestellt und charakterisiert:

1) Die Kerbschlagzähigkeit, $a_K$, in [$kJ/m^2$] der Proben wurde nach DIN 53 453 an bei 260 °C gespritzten Normkleinstäben bei 23 °C gemessen.

2) Die Durchstoßarbeit, $W_{ges}$, im Plastechontest (Nm), wurde nach DIN 53 453 an bei 270 °C spritzgegossenen 2 mm dicken Rundscheiben bestimmt. Die Prüfung erfolgte bei Raumtemepratur (23 °C) und -40 °C.

Tabelle 1

| Zusammensetzung der Formmassen | | | | | | | | |
|---|---|---|---|---|---|---|---|---|
| Beispiele | A | kg | B | kg | C | kg | D | kg |
| 1 | A 1 | 65 | $B_1$ 1 | 12,3 | C 2 | 5 | D 1 | 3,6 |
| | | | $B_2$ 1 | 14,1 | | | | |
| 2 | A 2 | 62 | $B_1$ 2 | 12 | C 1 | 7 | D 1 | 5 |
| | | | $B_2$ 2 | 12 | | | D 3 | 2 |
| 3 | A 1 | 75 | $B_1$ 1 | 8 | C 2 | 4,5 | D 4 | 2,5 |
| | | | $B_2$ 1 | 10 | | | | |
| 1* | A 1 | 50 | $B_1$ 2 | 27 | - | - | D 2 | 5 |
| | | | $B_2$ 1/$B_2$ 2 | 12/6 | | | | |
| 2* | A 2 | 54 | $B_1$ 1 | 23 | - | - | - | - |
| | | | $B_2$ 1 | 23 | | | | |
| Vergleichsversuche | | | | | | | | |

Tabelle 2

| Eigenschaften der Formmassen | | | |
|---|---|---|---|
| Beispiel | Schlagzähigkeit $a_K$ [kJ/m$^2$] | Durchstoßarbeit | |
| | | Wg RT | [N/m] -40 °C |
| 1 | 25,4 | 68,9 | 67,4 |
| 2 | 22,8 | 54,4 | 38,9 |
| 3 | 19,8 | 70,5 | 65,9 |
| 4 | 27,0 | 58,7 | 45,5 |
| 1* | 18,1 | 47,2 | 29,9 |
| 2* | 11,9 | 38,0 | 0 |

## Ansprüche

1. Thermoplastische Formmassen, enthaltend

A) 9 bis 90 Gew.-% Polycarbonat,

B) 9 bis 90 Gew.-% einer Polymerkomponente, die aus 30 bis 100 Gew.-% Polyphenylenether $B_1$ und 0 bis 70 Gew.-%, jeweils bezogen auf B, eines vinylaromatischen Polymeren $B_2$ besteht,

C) 1 bis 40 Gew.-% eines Segmentpolymeren, das mindestens ein Segment aus vinylaromatischen Monomeren und mindestens ein Polycarbonatsegment enthält,

D) 0 bis 40 Gew.-% eines schlagzäh modifizierenden Kautschuks und

E) 0 bis 30 Gew.-% übliche Zusatzstoffe.

2. Thermoplastische Formmassen nach Anspruch 1, enthaltend

20 bis 75 Gew.-% A,
20 bis 75 Gew.-% B,
4 bis 20 Gew.-%C,
1 bis 25 Gew.-% D und
0 bis 30 Gew.-% E,
wobei die Gew.-% bezogen sind auf die Summe aus A bis E.

3. Thermoplastische Formmassen nach mindestens einem der Ansprüche 1 oder 2, in denen die Komponente A und/oder das Polycarbonatsegment in der Komponente C ein Homo- oder Copolycarbonat auf Basis von Diphenolen der allgemeinen Formel

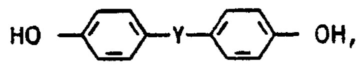

in der

Y eine Einfachbindung, einen Alkandiyl- oder Alkylidenrest mit 1 bis 7 C-Atomen, einen Cycloalkandiyl- oder Cycloalkylidenrest mit 5 bis 12 C-Atomen, -O-, -S-,
$-\underset{\underset{O}{\|}}{S}-$, $-SO_2-$, oder $-\underset{\underset{O}{\|}}{C}-$ bedeutet.

4. Thermoplastische Formmassen nach mindestens einem der Ansprüche 1 oder 2, in denen die Komponente A und/oder das Polycarbonatsegment in der Komponente C ein Polyestercarbonat auf Basis von Diphenolen der allgemeinen Formel

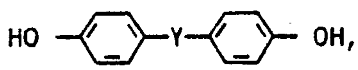

in der

Y eine Einfachbindung, einen Alkandiyl- oder Alkylidenrest mit 1 bis 7 C-Atomen, einen Cycloalkandiyl- oder Cycloalkylidenrest mit 5 bis 12 C-Atomen, -O-, -S-,
$-\underset{\underset{O}{\|}}{S}-$, $-SO_2-$, oder $-\underset{\underset{O}{\|}}{C}-$ bedeutet,
und Terephthal- und/oder Isophthalsäure ist, wobei das Polyestercarbonat einen Estergruppengehalt von 10 bis 95 Mol.-%, bezogen auf die Summe von Ester- und Carbonatgruppen, enthält.

5. Thermoplastische Formmassen nach Anspruch 3 oder 4, wobei das Diphenol Bisphenol A ist.

6. Verwendung von thermoplastischen Formmassen gemäß mindestens einem der Ansprüche 1 bis 5 zur Herstellung von Formkörpern.

7. Formkörper, enthaltend als wesentliche Komponenten Formmassen gemäß mindestens einem der Ansprüche 1 bis 5.